# EUROPEAN PATENT SPECIFICATION

(11) **EP 0 666 455 B1**
(45) Date of publication and mention of the grant of the patent: **27.10.1999**
(21) Application number: 95500007.0
(22) Date of filing: 27.01.1995
(51) Int. Cl.: F24J 2/34

(54) **Compact solar energy collector**
Kompakter Sonnenenergiekollektor
Collecteur compact d'énergie solaire

(30) Priority: 07.02.1994 ES 9400213
(43) Date of publication of application: 09.08.1995
(73) Proprietor: Barreto Avero, Manuel, E-38009 Santa Cruz de Tenerife (ES)
(72) Inventor: Barreto Avero, Manuel, E-38009 Santa Cruz de Tenerife (ES)
(74) Representative: Garcia Cabrerizo, Francisco

(56) References cited:
- WO-A-93/02327
- FR-A- 2 508 150
- US-A- 4 598 450
- PATENT ABSTRACTS OF JAPAN vol. 9 no. 146 (M-389) [1869] ,21 June 1985 & JP-A-60 023755 (KUBOTA TEKKO KK) 6 February 1985,
- PATENT ABSTRACTS OF JAPAN vol. 7 no. 81 (M-205) ,5 April 1983 & JP-A-58 008943 (TOUYOU NETSU HOGYO KK) 19 January 1983,

## Description

The invention consists of a compact solar energy collector which main feature resides in incorporating in the same housing the collector itself and the accumulator, which constitutes a clear novelty in relation to this type of collectors.

Such a type of collector is known from FR-A-2,508,150 which corresponds to the preamble portion of claim 1. This french document describes a compact solar energy collector, whereby the one unit integrates the collector and the accumulator housed in the one housing unit. However, the important feature of this collector is its hemispherical shape, which is cumbersome and thus do not lead to a very compact unit while being certainly very costly.

The object of the invention is to provide a compact solar energy collector wherein even low solar radiation days are not lost. Such a collector according to the invention is disclosed in claim 1.

The fundamental idea of the integrated system is that inside an unique housing, formerly enclosing only the collector, and with just a slight increase in depth, is fitted also the accumulator that shall have an external shape similar to that of a parallelepipedon, and as an improvement shall be divided by walls to better withstand water pressure and shall further incorporate all the accesories normally fitted to conventional systems, such as the pump, differential thermostat, purging system and valves.

The advantages offered by the integrated system are as follows:
(A) The first one can be its performance, given that we are dealing first of all with energy saving, there is no energy dissipation due to transfer between the collector and accumulator, as these units are linked by small pipes of just a few centimeters, that remain submerged in the mass of insulating material. Normal units tend to have a few meters of pipe running outside. There is also a considerable energy saving due to there not being an external cylindrically shaped accumulator, which surface dissipates energy, the losses due to this reason are substantially reduced to those of the collector.
(B) The second main advantage is its cost economy. This is due to the fact that we are using only a single housing for both collector and accumulator and part of the insulating material is also mounted on common walls.
(c) Another big advantage, and also the most notorious at first sight, is its pleasant aesthetics. A collector, as well as a photovoltaic panel, may lend a modern, environmental and functional outlook to the roof of a house, but it is not the same situation regarding the bulky accumulator .
(D) The biggest advantage is that assembly is guaranteed at factory and it does only have to be connected to the water distribution network. The end user himself may place it into operation by just linking it to the water inlet pipe and to the distribution outlet.

For a better understanding of the purpose of the invention a drawing is attached to this patent specification in which the following main parts are referenced as an example:
- 1.-: Pump
- 2.-: Photovoltaic panel
- 3.-: Transparent cover
- 4.-: Insulation material
- 5.-: Honeycombed accumulator
- 6.-: Collector panel
- 7.-: Selective surface
- 8.-: Assembly clamp
- 9.-: Level detector
- 10.-: Crimping lip
- 11.-: One way valve
- 12.-: Tap water outlet
- 13.-: Heat exchanger (primary circuit)
- 14.-: Insulation material
- 15.-: Expansion vessel
- 16.-: Purge outlet
- 17.-: Primary circuit filling valve
- 18.-: Tap water inlet
- 19.-: Bistable Circuit with liquid level detector
- 20. -: Improved housing batten

With this construction outlay, the operational stage progresses as follows:

Tap water enters into the honeycombed accumulator (5) through the tap water inlet (18) and comes out via the water outlet (12) ready to be used up. The water fills the accumulator and, whenever it tries to pass through to the primary circuit (13), shall be retained by the solenoid valve (17). Whenever sun radiation falls upon the cell (2), it does then supply electric current to the bistable electronic system (19) that has two functions, the first one is to use only one photovoltaic panel for the pump and the solenoid valve and the second is to prevent the pump operating dry if the primary circuit is not filled with water, this circuit may not only be built using integrated electronics, it may also be just a simple relay circuit. When the sensor (9) is not wet, the first thing that the bistable circuit shall do is to conduct the electric current to the solenoid valve, which shall then open and let the water through to the primary circuit, made up by the collector panel (6), the heat exchanger (13), the pump (1), the expansion vessel (15), the one way valve (11), and the filling solenoid valve (17), (this may also be a float operated valve). Whenever the water fills up the primary circuit it shall then reach the level detector (9) and the bistable (19) shall then cut off the pump (1) operation electric current. As we say that there is now solar radiation, the water inside the collector (6) shall warm up due to the well known greenhouse effect and at the same time the cell (2) shall then supply electric current to circulate the water as, even though the system does also work by convection, the pump (1) does improve its performance considerably, and the pump operates at a speed proportional to the amount of solar radiation. If the sun rays are strong, the water warms up considerably and the pump, due to its receiving more electric current from the photovoltaic panel, transfers it to the accumulator faster that it would do if the radiation is less, as if this is the case, then the pump would run at a lower speed and would allow a longer time for the water temperature to rise. Another important function of the pump (1) is opening the one way valve (11) and that, whenever it does not operate at night time, the convection flow does not reverse as said valve is safely shut, given that the return convention pressure would be just a few milligrams/cm², insufficient for a safety mechanism.

The transfer operation of the energy absorbed by the collector towards the accumulator is through the pump, and just as in any other conventional system, the objective is to keep the hot water inside the accumulator surrounded by the necessary thermal insulating material. The shape of the flat hot water accumulator is improved, approaching that of an edgeless parallelepipedon, as it is manufactured using short cylindrical surfaces, spherical and honeycombed compartments with flat walls, to the main purpose of withstanding pressures without increasing material thickness. Design theory is reduced to the fact that any part of it, including the walls, be subject only to pure pulling forces, but not to bending nor combined forces.

Whenever water expands in the primary circuit, the expansion vessel (15) shall then expand within the limits established by the fluid temperature inside said circuit and whenever it cools down shall then return to its original position.

We have previously described the operation of the forced circulation proportional to the level of solar radiation. The great advantage over and above that already known, is the pump that starts up and stops down through a differential thermostat, and the ideal situation is that if there is not a temperature differential high enough, which tends to be between 2 and 5 degrees centigrade, for the pump to start up, the system shown herein shall do so whenever solar radiation has a smaller value to heat up the water and, at the same, manage the circulation pump. Using the conventional differential thermostat system, many low solar radiation days are lost because said radiation has not reached the previously established differential threshold, the energy on cloudy days being more important, as there are no problems on full radiation days.

Other improvements regarding what is already available on the primary circuit automatic filling valve market is that these work under fluid pressure, so that it is necessary that the fluid circuit withstands a certain level of pressure, and it does then become necessary to have a certain wall thickness in the systems, but the invention, because it has an electronic liquid level detector, shall also stop filling whenever the liquid level has reached the sensor, that is to say, whenever it is really full, so that the circuit may be open to the atmosphere, and another advantage is that because the solenoid valve is fed by a photovoltaic cell, this shall work automatically and whenever the sun shines, but not when it is not necessary.

Another novelty yielding a great improvement over and above what is already known and almost doubtlessly at greater levels, is the integration for just one solar panel of the circulation pump and automatic filling, to a bistable system, with filling priority, so that if the circuit does not have water, the pump shall not run dry and whenever it is full, as long as there is solar radiation, the photovoltaic electric current shall circulate to the pump.

Finally, the lip (10) that incorporates the collector shall be substantially improved, as the former is strongly seamed to the plate in the successive folds that prevents it from turning and that, because of its design, admits an o-ring seal after being seamed to the plate, that is from the outside, instead of from the inside, where it would not be accessible.

With the first type of lip, if the joint fails the collector is then useless, which is not the case with the one described above, as it is then only necessary to replace the o-ring seal.

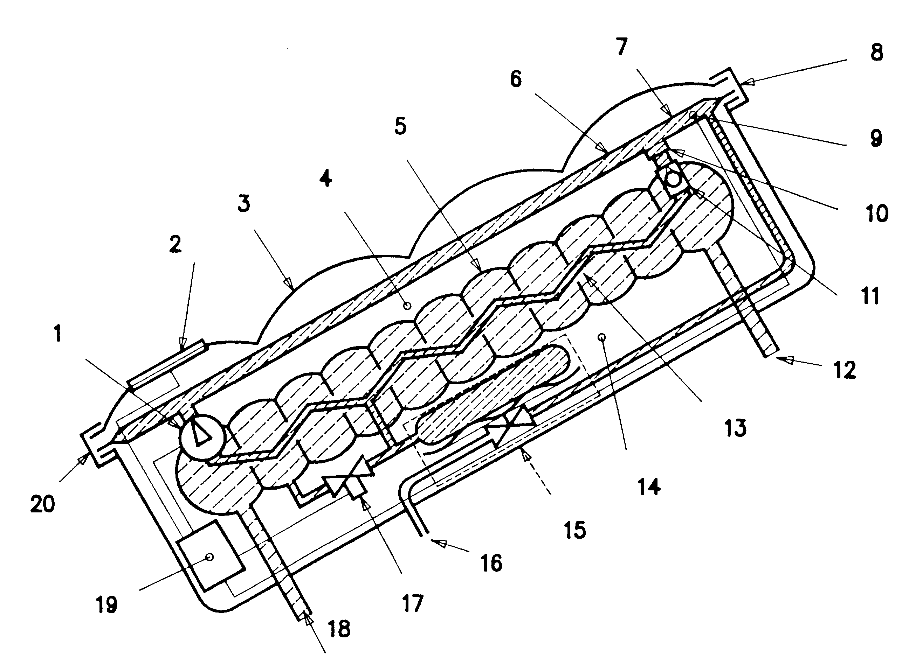

## Claims

1. A compact solar energy collector, whereby a collector panel (6) and an accumulator (5) are integrated in one housing unit, the housing unit at its upper portion having a transparent cover (3) fixed at its ends, being also internally fitted with the accumulator (5) fitted with a water inlet (18) and an outlet (12), as well as a heat exchanger, which exchanger is fitted with a one-way valve (11), at one end connected to a pump (1) and to the collector panel (6), whereas the other end is jointed to the collector panel, the heat exchanger (13), the one-way valve (11) and the collector panel (6) forming a primary circuit, the rest of the inside of the housing being filled with insulating material (4, 14), characterized in that said transparent cover (3) is fixed at its ends using an assembly clamp (8) and a batten (20), said accumulator (5) has a flat shape, is honeycombed and divided by vertical walls, said other end of the heat exchanger (13) is fitted with said one way valve (11) and with a crimping lip (10) jointed to the collector panel (6) which has a flat shape, and said pump (1) is supplied with electric current generated by a photovoltaic panel (2) and operates at a speed proportional to the amount of solar radiation, and said cover (3) is fitted with said photovotaic panel (2) which is connected to a bistable circuit (19) with a liquid level detector (9) fitted in the collector (6) which circuit (19) is also connected to a primary circuit filling valve (17) connecting the primary circuit to a branch of the honeycombed accumulator (5) and which branch ends at a expansion vessel (15) fitted with a purging outlet (16) of the primary circuit.

2. A compact solar energy collector according to claim 1 wherein said transparent cover (3) has a corrugated shape.

## Patentansprüche

1. Ein kompakter Solarkollektor, in dem ein Kollektorfeld (6) und ein Akkumulator (5) in einem Gehäuse integriert sind, wobei das Gehäuse in seinem oberen Teil eine transparente Abdeckung (3) aufweist, die an ihren Enden befestigt ist, und diese auch intern mit dem Akkumulator (5) verbunden ist, wobei dieser einen Wassereingang (18) und einen Ausgang (12) aufweist, sowie mit einem Wärmeaustauscher versehen ist, der ein Einheitsdurchflussventil (11) aufweist, das an einem Ende an eine Pumpe (1) und an das Kollektorfeld (6) angeschlossen ist, während das andere Ende mit dem Kollektorfeld verbunden ist, wobei der Wärmeaustauscher (13), das Einheitsdurchflussventil (11) und das Kollektorfeld (6) einen Primärstromkreis bilden und der restliche Teil des Gehäuseinneren mit Isoliermaterial (4,14) versehen ist, dadurch gekennzeichnet, dass die genannte transparente Abdeckung (3) an seinen Enden durch eine Verbindungsschelle (8) und einen Anschlag (20) befestigt ist, der genannte Akkumulator (5), wabenförmig, in flacher Ausführung gestaltet und durch vertikale Wände geteilt ist, wobei das andere genannte Ende des Wärmeaustauschers (13) mit dem erwähnten Durchflussventil und einem Befestigungsvorsprung (10) versehen ist und mit dem Kollektorfeld (6) in flacher Ausführung verbunden ist, dass die erwähnte Pumpe (1) mit elektrischem Strom arbeitet, der durch ein fotovoltaisches Feld (2) erzeugt wird und das mit einer Geschwindigkeit, die proportional der Stärke der Solarstrahlung ist, arbeitet und, dass die erwähnte Abdeckung (3) mit dem genannten fotovoltaischem Feld (2) versehen ist, welches an eine bistabile Kippschaltung (19) mit einem Flüssigkeitsstandetektor (9), mit dem das Kollektorfeld (6), die Schaltung (19) versehen sind, angeschlossen ist, das ausserdem an ein Einlaufventil (17) des Primärstromkreises angeschlossen ist, das den Primärstromkreislauf mit einer Abzweigung des wabenförmigen Akkumulators (5) anschliesst und dessen Abzweigung in einem Ausdehnungsgefäss (15) endet, das an einen Reinigungsausgang (16) des Primärstromkreises angepasst ist.

2. Ein kompakter Solarkollektor nach Anspruch 1, bei dem die transparente Abdeckung (3) wellenförmig gestaltet ist.

## Revendications

1. Un collecteur compact d'énergie solaire, dans lequel sont intégrés un panneau (6) du collecteur et un accumulateur (5) en une unité de carcasse, unité de carcasse qui a dans sa partie supérieure une couverture (3) transparente fixée par ses extrémités, qui est aussi couplée intérieurement à l'accumulateur (5) pourvu d'une entrée (18) d'eau et d'une sortie (12), ainsi que d'un échangeur de chaleur, échangeur qui est pourvu d'une soupape (11) à passage unique, connectée par une extrémité à une pompe (1) et au panneau (6) du collecteur, tandis que l'autre extrémité est unie au panneau du collecteur, l'échangeur (13) de chaleur, la soupape (11) à passage unique et le panneau (6) du collecteur formant un circuit primaire, le reste de l'intérieur de la carcasse étant rempli de matériel isolant (4, 14), se caractérisant en ce que cette couverture (3) transparente est fixée par ses extrémités en utilisant un collier (8) d'union et un battant (20), ledit accumulateur (5) a une firme plate, est panelé et divisé par des parois verticales, l'autre extrémité citée de l'échangeur (13) de chaleur est pourvue de la dite soupape (11) de passage de chaleur et d'une saillie (10) de sertissage unie au panneau (6) du collecteur qui a une forme plate, et la dite pompe (1) s'alimente de courant électrique généré par un panneau photovoltaïque (2) et travaille à une vitesse proportionnelle à la quantité de rayonnement solaire, et la dite couverture (3) est pourvue du dit panneau photovoltaïque (2) qui est connecté à un circuit bi-stable (19) avec un détecteur (9) du niveau de liquide dont est pourvu le collecteur (6), circuit (19) qui est aussi connecté à une soupape (17) de remplissage du circuit primaire qui connecte le circuit primaire avec une ramification de l'accumulateur (5) panelé et dont la ramification s'achève en un réservoir (15) d'expansion (15) adapté avec une sortie (16) d'épuration du circuit primaire.

2. Un collecteur compact d'énergie solaire conforme à la revendication 1, où la dite couverture transparente (3) a une forme ondulée.
